# FASCICULE DE BREVET EUROPEEN

(11) **EP 3 142 918 B1**
(45) Date de publication et mention de la délivrance du brevet: **08.07.2020**
(21) Numéro de dépôt: 15736534.7
(22) Date de dépôt: 13.05.2015
(51) Int. Cl.: A61G 5/10

(54) **VEHICULE PERSONNEL CONDUISIBLE AVEC LES PIEDS**
FUSSBEDIENTES PRIVATFAHRZEUG
FOOT-OPERATED PRIVATE VEHICLE

(30) Priorité: 14.05.2014 FR 1454269
(43) Date de publication de la demande: 22.03.2017
(73) Titulaire: Moujoud, Aïssam, 86000 Poitiers (FR)
(72) Inventeur: Moujoud, Aïssam, 86000 Poitiers (FR)
(74) Mandataire: Aquinov
(86) Numéro de dépôt international: PCT/FR2015/051271
(87) Numéro de publication internationale: WO 2015/173523

(56) Documents cités:
- BE-A3- 1 015 829
- CN-U- 202 608 981
- CN-Y- 200 942 838
- GB-A- 1 501 731
- TW-B- I 362 258
- US-A- 883 371
- US-A- 4 020 916
- US-A1- 2010 181 124
- US-B2- 6 845 829

## Description

La présente invention est relative à un véhicule personnel, aussi appelé parfois transporteur personnel.

Par véhicule personnel, on entend un véhicule d'encombrement réduit, destiné à rendre les déplacements d'une unique personne plus rapides et moins fatigants.

Accessoirement, un tel véhicule personnel peut aussi être utilisé pour transporter une autre personne.

Parmi les véhicules personnels déjà mis en vente sur le marché, on distingue ceux appartenant à la famille des gyropodes.

Ces gyropodes sont dénommés ainsi car ils utilisent un système de stabilisation gyroscopique permettant à leur utilisateur de contrôler dynamiquement la vitesse de déplacement du véhicule et sa direction de déplacement.

Pour l'utilisateur, ce contrôle dynamique consiste simplement à déplacer son centre de gravité vers l'avant pour faire avancer le véhicule, vers l'arrière pour le ralentir, et vers la droite ou vers la gauche lorsqu'il souhaite se diriger vers l'une de ses deux directions.

Des gyropodes connus et actuellement disponibles sur le marché sont vendus sous les marques SEGMAY®,EWEE® et ROBIN-M1®.

Ces trois gyropodes comprennent deux roues motorisées et montées de part et d'autre d'une plateforme sur laquelle l'utilisateur se tient debout, et une colonne de conduite s'étendant depuis la plateforme et offrant à son extrémité supérieure des poignées de maintien pour l'utilisateur.

Selon un inconvénient, les mains de l'utilisateur ne sont pas libres lorsqu'il se déplace à l'aide de l'un de ces gyropodes.

En effet, pour ne pas perdre l'équilibre et risquer de chuter violemment sur le sol, l'utilisateur doit nécessairement s'agripper aux poignées de maintien de la colonne de conduite.

Au mieux, lors de l'utilisation de ces gyropodes, seuls les utilisateurs les plus aguerris peuvent se maintenir d'une seule main et effectuer une action ou transporter un objet avec l'autre main.

Aussi, il existe d'autres véhicules personnels assimilables à des gyropodes, mais libérant les mains de l'utilisateur lors d'un déplacement.

Par exemple, la société TOYOTA® a développé un gyropode sous le nom WINGLET® prenant aussi la forme d'une plateforme avec deux roues latérales motorisées et sur laquelle l'utilisateur se tient debout.

Toutefois, à la différence des gyropodes précédents, la colonne de conduite du gyropode WINGLET® est remplacée par deux bras s'étendant depuis le centre de la plateforme et offrant à leurs extrémités supérieures deux appuis pour les jambes de l'utilisateur, les deux appuis se situant approximativement à hauteur des mollets de l'utilisateur.

Ainsi, lors de l'utilisation du gyropode WINGLET®, l'utilisateur doit serrer les deux appuis entre ses jambes pour se tenir debout en équilibre sur la plateforme.

Bien que permettant de libérer les mains de l'utilisateur, le fait de devoir serrer les appuis entre les jambes peut fatiguer les utilisateurs, notamment sur de longs déplacements.

Enfin, de manière générale, et malgré les performances des nouveaux systèmes de stabilisation gyroscopique, tous les gyropodes à roues latérales semblables à ceux qui viennent d'être cités ne présentent pas une stabilité à toute épreuve vis-à-vis des mouvements de tangage, c'est-à-dire des mouvements de bascule d'avant en arrière ou d'arrière en avant, pouvant être provoqués par une erreur de conduite de l'utilisateur ou par un obstacle au sol.

De plus, lorsque l'utilisateur transporte un objet en se tenant debout sur de tels gyropodes, sa conduite est perturbée par le poids de l'objet qu'il transporte.

En effet, l'objet transporté modifie le centre de gravité de l'utilisateur qui doit donc adapter sa conduite au poids de l'objet qu'il transporte.

Parallèlement, la société HONDA® a développé un véhicule personnel portant le nom d'Uni-Cub® et qui se conduit tel un gyropode en déplaçant son centre de gravité.

Toutefois, à la différence des véhicules précédemment décrits, l'Uni-Cub® comprend une selle et des pédales latérales permettant à l'utilisateur de se déplacer en position assise.

En outre, au lieu de deux roues latérales, l'Uni-Cub® comprend une grande roue centrale dont la bande de roulement est constituée par une multitude de roues transversales disposées radialement autour de l'axe de rotation de la roue centrale, ainsi qu'une roue arrière transversale dont l'axe de rotation est perpendiculaire à celui de la roue centrale et parallèle à la direction avant-arrière du véhicule.

Si cette disposition des roues améliore la stabilité du véhicule vis-à-vis des mouvements de tangage, elle réduit cette stabilité vis-à-vis des mouvements de roulis, c'est-à-dire des mouvements de bascule de gauche à droite et de droite à gauche.

Enfin, et bien que plus confortable, la position assise réduit la vue et la hauteur d'accès de l'utilisateur, ce qui peut se révéler gênant lors d'un déplacement au milieu d'une foule, ou dans les situations dans lesquelles l'utilisateur doit se mettre debout pour accomplir une action avec ses mains ou attraper un objet.

Aussi, il existe d'autres véhicules personnels offrant plus de stabilité grâce à une conception à quatre roues et préservant la vue et la hauteur d'accès de l'utilisateur grâce à une position de conduite mi-assise mi-debout.

Un tel véhicule est décrit dans la demande US-6.845.829.

Afin de libérer les mains de l'utilisateur, le véhicule personnel décrit dans cette demande US-6.845.829 comprend des pédales rotatives permettant de piloter le véhicule en direction et en vitesse avec les pieds.

Plus précisément, deux pédales droite et gauche permettent de contrôler la vitesse de rotation des axes de deux moteurs entrainant indépendamment les roues arrières droite et gauche du véhicule.

Ces deux pédales sont montées en rotation de part et d'autre du châssis du véhicule et autour d'axes perpendiculaires à la direction avant-arrière du véhicule.

Pour piloter le véhicule en vitesse, l'utilisateur fait tourner les deux pédales conjointement avec ses pieds vers l'avant ou vers l'arrière, et pour le piloter en direction, il fait tourner les deux pédales différemment l'une de l'autre afin que les deux roues arrières aient des vitesses de rotation différentes, le véhicule se dirigeant du côté opposé à celui de la roue qui tourne le plus vite.

Bien que relativement simple sur le plan théorique, le pilotage du véhicule décrit dans la demande US-6.845.829 nécessite une certaine dextérité et n'offre pas une conduite intuitive.

En effet, peu de personnes sont naturellement habituées à piloter un véhicule en direction en actionnant deux pédales ou deux leviers simultanément mais de manière différente. Selon un autre inconvénient, les pédales du véhicule décrit dans la demande US-6.845.829 sont situées sous l'assise du véhicule et dans l'axe vertical de cette assise, des plaques d'appui étant prévues à l'avant du châssis du véhicule et à mi-hauteur entre les pédales et l'assise pour les genoux de l'utilisateur.

Ce positionnement des pédales confère une position de conduite favorisant le basculement du haut du corps de l'utilisateur vers l'avant, notamment lors d'une décélération du véhicule.

Aussi, pour parer à cet inconvénient, le document US-6.845.829 prévoit un garde-corps enserrant la taille de l'utilisateur.

Cependant, ce garde-corps se révèle inconfortable et il empêche l'utilisateur de monter et de descendre rapidement du véhicule, ce qui peut être gênant dans le cadre d'une utilisation professionnelle.

La présente invention vise à remédier aux inconvénients de l'art antérieur.

A cet effet, l'invention a pour objet un véhicule personnel conduisible avec les pieds, le véhicule comprenant un châssis s'étendant en longueur le long d'un axe longitudinal, en largeur le long d'un axe transversal, et en hauteur le long d'un axe vertical, le véhicule comprenant en outre un train de roues avant monté à l'avant de ce châssis, un train de roues arrière monté à l'arrière de ce châssis, une assise montée sur ce châssis, au moins un moteur permettant d'entrainer en rotation au moins une roue d'un train de roue, des moyens d'alimentation de ce moteur, et des moyens de pilotage du véhicule en vitesse et en direction prenant la forme de deux pédales droite et gauche, chaque pédale comprenant une surface de réception d'un pied de l'utilisateur, et au moins une pédale, dite de vitesse, étant montée en rotation par rapport au châssis autour d'un axe de basculement perpendiculaire à l'axe vertical du châssis du véhicule, une rotation de cette pédale de vitesse autour de son axe de basculement étant utilisée pour piloter le véhicule en vitesse. Selon l'invention, le véhicule personnel est caractérisé en ce qu'au moins une pédale, dite de direction, est montée en rotation par rapport au châssis autour d'un axe de pivotement parallèle à l'axe vertical du châssis du véhicule, une rotation de cette pédale de direction autour de son axe de pivotement étant utilisée pour piloter le véhicule en direction. Toutefois, dans une variante de réalisation préférée des moyens de pilotage du véhicule personnel, les deux pédales droite et gauche sont des pédales de direction, ces deux pédales de direction droite et gauche étant montées en rotation par rapport au châssis respectivement autour d'axes de pivotement droit et gauche parallèles à l'axe vertical du châssis du véhicule, et des rotations simultanées de ces deux pédales de direction droite et gauche autour de leur axes de pivotement droit et gauche étant utilisées pour piloter le véhicule en direction.

Donc, la conduite en direction du véhicule personnel selon l'invention est obtenue par un mouvement de lacet imposé à la pédale ou aux pédales de direction, ce mouvement de lacet consistant en une rotation d'une pédale de droite à gauche autour d'un axe sensiblement vertical.

Avantageusement, ce mouvement de lacet de la pédale ou des pédales de direction confère au véhicule une action de conduite plus naturelle pour l'utilisateur.

De plus, les deux pédales étant liées mécaniquement de manière pivoter simultanément et d'un même angle autour de leur axes de pivotement respectifs, les moyens de pilotage en direction du véhicule personnel selon l'invention ne nécessitent aucune habilité particulière. Donc, comme le véhicule personnel selon l'invention offre un pilotage en direction intuitif, il est facilement utilisable par la majorité des utilisateurs.

Toujours en vue de faciliter l'utilisation du véhicule personnel selon l'invention, une rotation de la pédale droite autour de son axe de basculement droit est utilisée pour augmenter la vitesse du véhicule, et une rotation de la pédale gauche autour de son axe de basculement gauche est utilisée pour réduire la vitesse du véhicule.

En effet, ces mouvements de tangage des pédales, c'est-à-dire de rotation d'avant en arrière autour d'un axe sensiblement horizontal, sont bien connus des utilisateurs pour contrôler l'accélération et le freinage de véhicules ordinaires comme les automobiles.

Selon une autre caractéristique avantageuse de la conception des moyens de pilotage en direction et en vitesse du véhicule personnel selon l'invention, les deux pédales droite et gauche sont montées à l'avant du châssis du véhicule, l'assise se situant en position centrale dans la longueur et dans la largeur du châssis du véhicule.

Plus précisément, les pédales sont montées côte-à-côte sur le châssis du véhicule, entre les deux roues droite et gauche du train de roues avant.

Ce positionnement des pédales devant l'assise permet à l'utilisateur de se tenir en position assis-debout avec les jambes en avant, cette position de conduite améliorant le confort et la stabilité de l'utilisateur du véhicule.

De plus, cette position de conduite jambes en avant permettant à l'utilisateur de mieux résister à l'énergie cinétique qui entraine son corps vers l'avant lors de chaque décélération du véhicule, on évite l'utilisation d'un garde-corps ceinturant l'utilisateur et l'empêchant de monter et descendre rapidement du véhicule.

D'autres caractéristiques et avantages ressortiront de la description qui va suivre de l'invention, description donnée à titre d'exemple uniquement, en regard des dessins annexés sur lesquels :
- la figure 1 est une vue en perspective du véhicule personnel selon l'invention, avec une première variante de son châssis,
- la figure 2 est une vue dépouillée en perspective du véhicule personnel selon l'invention, avec une première variante de son châssis,
- la figure 3 est une vue de dessous et de détails d'une première variante des moyens directionnels du véhicule personnel selon l'invention, avec une première variante de son châssis,
- la figure 4 est une vue de dessous en perspective d'une seconde variante des moyens directionnels du véhicule personnel selon l'invention, avec une première variante de son châssis,
- la figure 5 est une vue en perspective du véhicule personnel selon l'invention, avec une seconde variante de son châssis déployé,
- la figure 6 est une vue dépouillée de côté du véhicule personnel selon l'invention, avec une seconde variante de son châssis déployé,
- la figure 7 est une vue de côté du véhicule personnel selon l'invention, avec une seconde variante de son châssis replié,
- la figure 8 est une vue en perspective du véhicule personnel selon l'invention, avec une première variante de son châssis, et avec son assise repliée,
- la figure 9 est une vue en perspective du véhicule personnel selon l'invention, avec différents équipements publicitaires et utiles à une utilisation touristique,

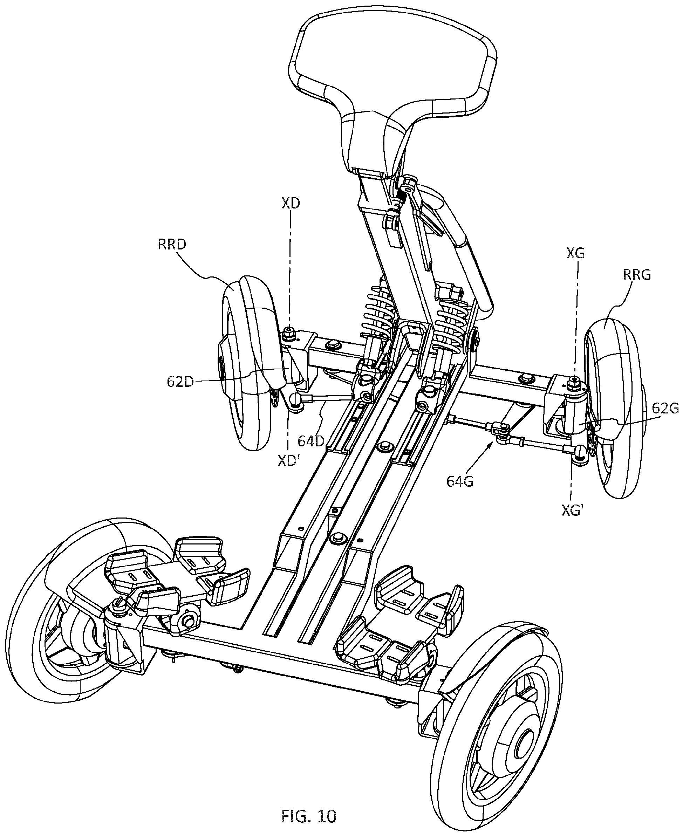

- la figure 10 est une vue en perspective montrant une variante avec des roues arrière directionnelles.

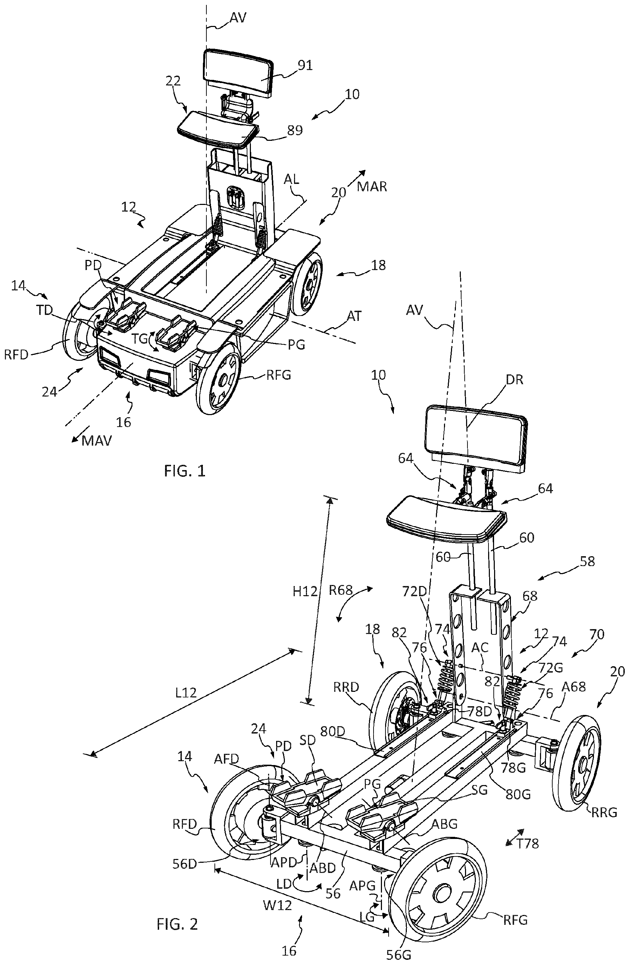

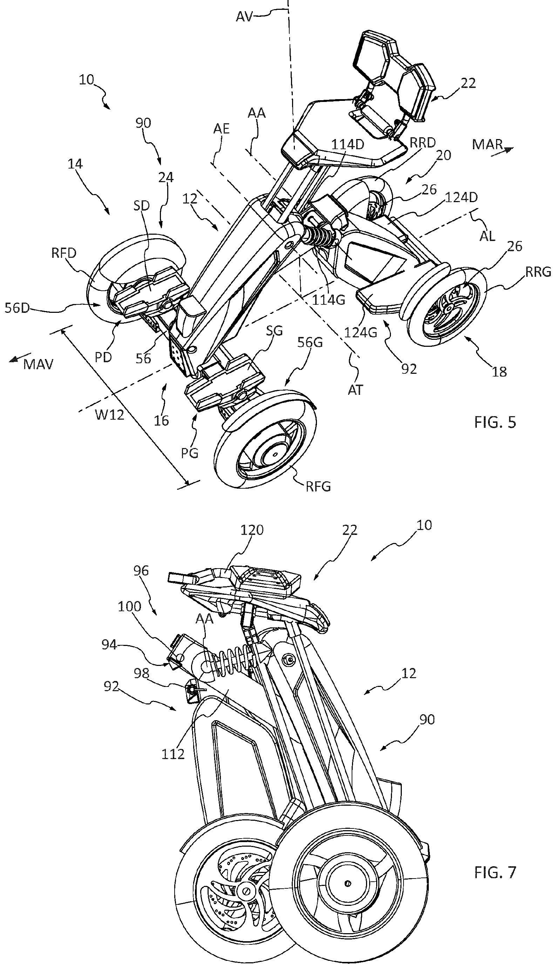

Comme l'illustrent les figures 1 et 5, la présente invention est relative à un véhicule personnel 10 conduisible avec les pieds.

Par conduisible avec les pieds, l'invention entend que l'utilisateur pilote le véhicule 10 en vitesse et en direction uniquement avec ses pieds.

En effet, un objectif essentiel de la présente invention est de permettre à un utilisateur de se déplacer facilement et rapidement sans avoir les mains prises par les moyens de pilotage du véhicule.

Comme cela est visible sur les figures 1, 2, 5 et 6, ce véhicule personnel 10 comprend un châssis 12 s'étendant en longueur L12 le long d'un axe longitudinal AL, en largeur W12 le long d'un axe transversal AT, et en hauteur H12 le long d'un axe vertical AV.

L'axe longitudinal AL, l'axe transversal AT et l'axe vertical AV sont perpendiculaires et ils forment un repère orthonormé.

Le véhicule personnel 10 comprend en outre un train 14 de roues avant monté à l'avant 16 du châssis 12 et un train 18 de roues arrière monté à l'arrière 20 de ce châssis 12.

Dans un mode de réalisation préféré de l'invention, le train 14 de roues avant comprend deux roues avant droite RFD et gauche RFG, et le train 18 de roues arrière comprend deux roues arrière droite RRD et gauche RRG.

Cette conception à quatre roues favorise la stabilité du véhicule 10, notamment à l'arrêt et lors de la prise de virages, et les quatre roues du véhicule 10 permettent aussi le franchissement d'obstacles tels des trottoirs ou des marches.

Pour le confort de l'utilisateur, le véhicule personnel 10 comprend aussi une assise 22 montée sur ce châssis 12.

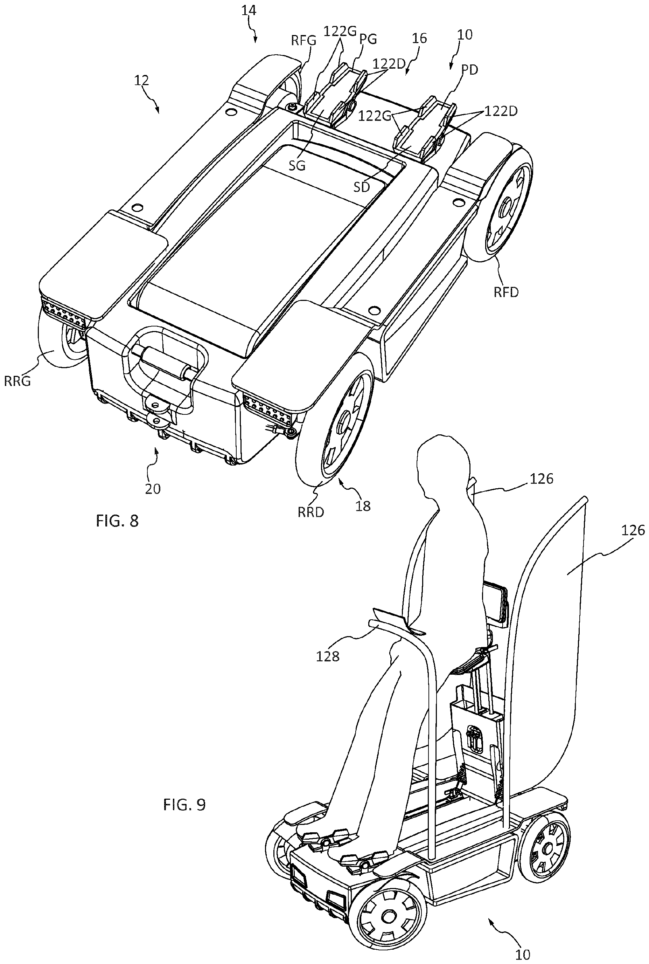

Plus en détails, cette assise 22 est montée sur le châssis 12 de manière à permettre à un utilisateur de s'installer en position de conduite mi-assise mi-debout sur le véhicule 10, comme l'illustre la figure 9.

Ensuite, le véhicule personnel 10 comprend au moins un moteur permettant d'entrainer en rotation au moins une roue d'un train 14,18 de roues, et des moyens d'alimentation de ce moteur.

Dans un mode de réalisation préféré de l'invention, le moyeu de chacune des deux roues avant droite RFD et gauche RFG intègre une motorisation électrique MD,MG alimentée par une batterie d'accumulateurs embarquée sur le véhicule 10. Cette batterie n'est pas visible sur les figures mais elle est de préférence fixée à un élément du châssis 12 du véhicule, et protégée par un cache.

Enfin, le véhicule personnel 10 selon l'invention comprend des moyens 24 de pilotage du véhicule en vitesse et en direction.

Ces moyens 24 de pilotage prennent la forme de deux pédales droite PD et gauche PG, chaque pédale PD,PG comprenant une surface de réception SD,SG d'un pied de l'utilisateur. Au moins une pédale, dite de vitesse, est montée en rotation par rapport au châssis 12 autour d'un axe de basculement sensiblement perpendiculaire à l'axe vertical AV du châssis 12 du véhicule 10, une rotation de cette pédale de vitesse autour de son axe de basculement étant utilisée pour piloter le véhicule 10 en vitesse.

Par exemple, un basculement d'une pédale vers l'avant est utilisé pour augmenter la vitesse et un basculement de cette pédale vers l'arrière permet de réduire la vitesse du véhicule.

Toutefois, dans un mode de réalisation préféré de l'invention, les deux pédales droite PD et gauche PG sont des pédales de vitesse, ces deux pédales de vitesse droite PD et gauche PG étant montées en rotation TD,TG par rapport au châssis 12 respectivement autour d'axes de basculement droit ABD et gauche ABG sensiblement perpendiculaires à l'axe vertical AV du châssis 12 du véhicule 10, une rotation TD de la pédale droite PD autour de son axe de basculement droit ABD étant utilisée pour augmenter la vitesse du véhicule 10, et une rotation TG de la pédale gauche PG autour de son axe de basculement gauche ABG étant utilisée pour réduire la vitesse du véhicule 10.

Plus précisément, un basculement de la pédale droite PD vers l'avant est utilisé pour augmenter la vitesse du véhicule 10 en marche avant MAV, et un basculement de la pédale gauche PG vers l'avant est utilisé pour réduire la vitesse du véhicule 10 en marche avant MAV.

De plus, et lorsque le véhicule 10 est à l'arrêt, un basculement de la pédale droite PD vers l'arrière est utilisé pour augmenter la vitesse du véhicule 10 en marche arrière MAR.

Comme indiqué précédemment, ces mouvements de tangage des pédales PD et PG, c'est-à-dire de rotation TD et TG d'avant en arrière autour d'axes de basculement ABD et ABG sensiblement horizontaux, sont connus et utilisés par un grand nombre d'utilisateurs pour contrôler l'accélération et le freinage de véhicules plus ordinaires comme les automobiles.

Donc, le véhicule personnel selon l'invention est facilement conduisible en vitesse.

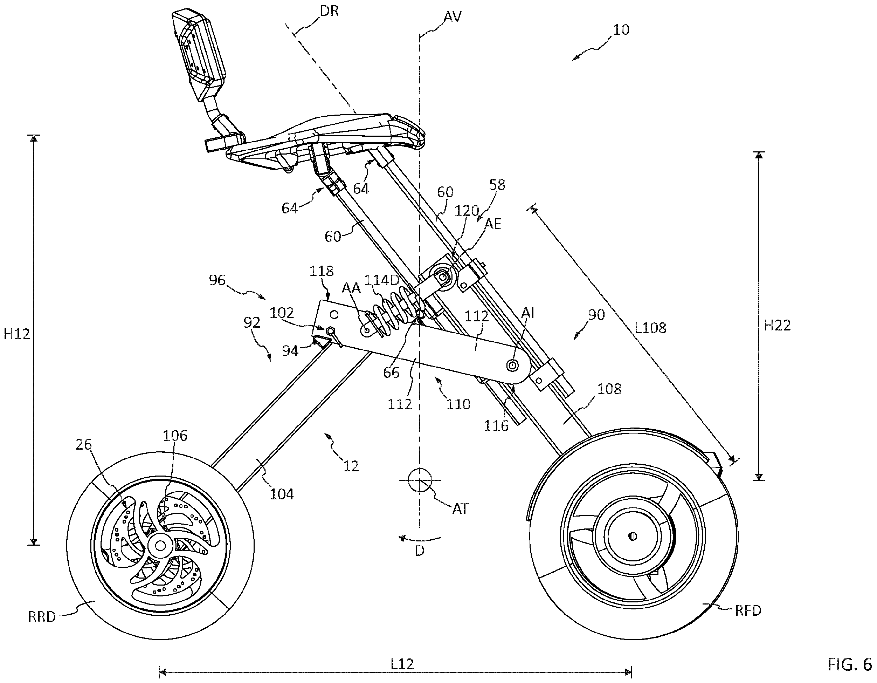

En vue de mettre en œuvre le pilotage en vitesse, et dans un mode de réalisation préféré de l'invention, chacune des roues arrière droite RRD et gauche RRG du train 18 de roues arrière est équipée de moyens de freinage 26 visibles en figures 5 et 6, ces moyens de freinage 26 prenant par exemple la forme de freins à disque.

Alternativement, le freinage du véhicule 10 peut aussi être obtenu grâce aux motorisations électriques MD,MG de chacune des deux roues avant droite RFD et gauche RFG.

En outre, chaque pédale PD,PG utilisée pour piloter le véhicule en vitesse est équipée d'un capteur mesurant sa rotation TD,TG autour de son axe de basculement ABD,ABG, cette mesure étant utilisée pour commander en vitesse chaque moteur entrainant une roue, et/ou pour commander les moyens de freinage 26.

Parallèlement, le véhicule personnel 10 selon l'invention offre aussi un pilotage en direction intuitif et naturel pour la plupart des utilisateurs potentiels.

A cet effet, et selon une caractéristique importante de la présente invention, au moins une pédale, dite de direction, est montée en rotation par rapport au châssis 12 autour d'un axe de pivotement sensiblement parallèle à l'axe vertical AV du châssis du véhicule, une rotation de cette pédale de direction autour de son axe de pivotement étant utilisée pour piloter le véhicule 10 en direction.

Toutefois, dans un mode de réalisation préféré de l'invention, les deux pédales droite PD et gauche PG sont des pédales de direction, ces deux pédales de direction droite PD et gauche PG étant montées en rotation LD,LG par rapport au châssis 12 respectivement autour d'axes de pivotement droit APD et gauche APG sensiblement parallèles à l'axe vertical AV du châssis 12 du véhicule 10, et des rotations LD,LG simultanées de ces deux pédales de direction droite PD et gauche PG autour de leur axes de pivotement droit APD et gauche APG étant utilisées pour piloter le véhicule 10 en direction.

Comme indiqué précédemment, ces mouvements de lacet des pédales PD et PG, c'est-à-dire de rotation LD et LG de droite à gauche autour d'axes de pivotement droit APD et gauche APG sensiblement verticaux, sont des actions de conduite plus naturelles.

En effet, un utilisateur du véhicule doit simplement orienter la ou les pédales de direction PD,PG dans la direction vers laquelle il souhaite se déplacer avec le véhicule.

Bien entendu, pour permettre au véhicule de changer de direction lorsque l'utilisateur fait pivoter la ou les pédales de direction PD,PG, au moins un train de roues 14,18 comprend des roues directrices.

Dans une première variante des moyens directionnels 27 du véhicule 10 selon l'invention, et comme l'illustrent les figures 1 à 3 et 5 à 7, les deux roues avant droite RFD et gauche RFG sont directrices.

A cet effet, chacune de ces deux roues avant droite RFD et gauche RFG est respectivement montée sur un porte-moyeu avant droit PFD et gauche PFG, chacun de ses porte-moyeux avant PFD,PFG étant monté pivotant sur le châssis 12 autour d'un axe de porte-moyeu AFD,AFG sensiblement parallèle à l'axe vertical AV du châssis 12.

Ensuite, et afin qu'une rotation LD,LG d'une pédale de direction PD,PG autour de son axe de pivotement APD,APG entraine un changement d'orientation de chaque roue directrice RFD, RFG, chaque pédale de direction PD,PG est reliée par un mécanisme articulé 28 à chaque porte-moyeu PFD,PFG de chaque roue directrice RFD,RFG.

Plus en détails, chaque porte-moyeu pivotant PFD et PFG comprenant un bras de levier BFD,BFG s'étendant perpendiculairement à l'axe de porte-moyeu AFD,AFG correspondant, et chaque pédale de direction PD,PG comprenant un bras de direction 30D,30G s'étendant perpendiculairement à son axe de pivotement APD,APG, le bras de direction 30D,30G de chaque pédale de direction PD,PG est relié au bras de levier BFD,BFG de chaque porte-moyeu pivotant PFD,PFG par des bielles articulées.

Les deux pédales droite PD et gauche PG étant de préférence des pédales de direction, une première bielle avant droite 32FD relie le bras de levier BFD du porte-moyeu avant droit PFD au bras de direction 30D de la pédale droite PD, une deuxième bielle avant gauche 32FG relie le bras de levier BFG du porte-moyeu avant gauche PFG au bras de direction 30G de la pédale gauche PG, et une troisième bielle centrale 34F relie le bras de direction 30D de la pédale droite PD au bras de direction 30G de la pédale gauche PG.

De préférence, les liaisons L1,L2,L3,L4 des trois bielles 32FD,32FG,34F aux différents bras BFD,BFG,30D,30G sont des liaisons articulées autour d'axes D1,D2,D3,D4 sensiblement parallèles à l'axe vertical AV du châssis 12.

Donc, ces bielles 32FD,32FG,34F, et de manière générale l'ensemble des composants du mécanisme articulé directionnel 28, sont de préférence articulés dans un plan d'articulation PA sensiblement perpendiculaire à l'axe vertical AV du châssis 12.

Toujours de préférence, la seconde liaison L2 regroupe la liaison articulée de la bielle avant droite 32FD avec le bras de direction 30D de la pédale droite PD et la liaison articulée de la bielle centrale 34F avec le bras de direction 30D de la pédale droite PD, et la troisième liaison L3 regroupe la liaison articulée de la bielle avant gauche 32FG avec le bras de direction 30D de la pédale droite PD et la liaison articulée de la bielle centrale 34F avec le bras de direction 30D de la pédale droite PD.

Dans cette première variante des moyens directionnels 27, les différents composants du mécanisme articulé 28 : bielles 32FD,32FG,34F, bras de levier BFD,BFG et bras de direction 30D,30G, sont situés à l'avant 16 du châssis 12, sous ce châssis 12 et entre les deux roues avant RFD,RFG directrices.

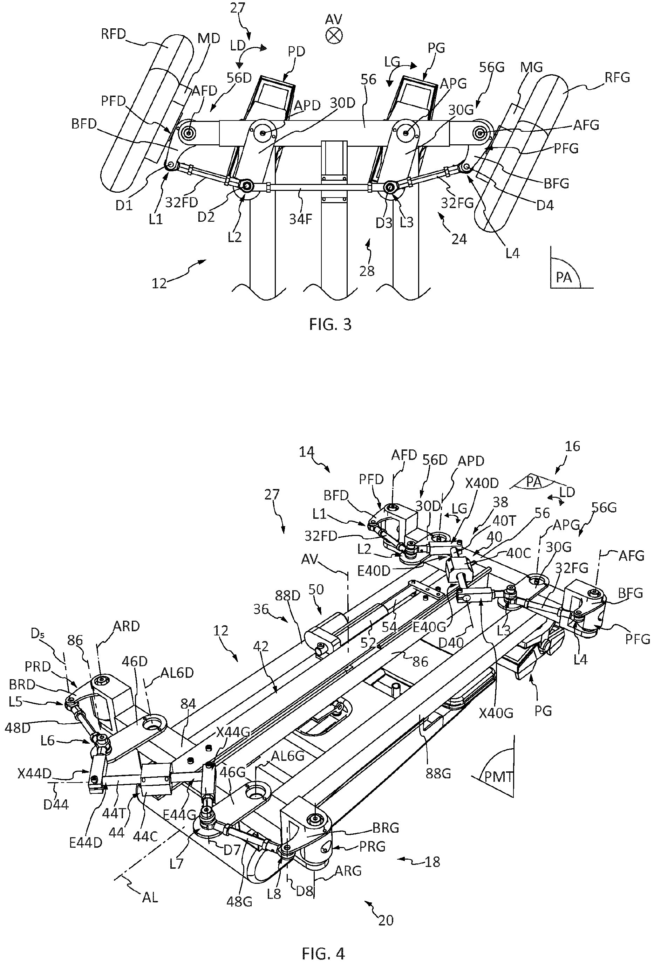

Dans une seconde variante des moyens directionnels 27 du véhicule 10 selon l'invention permettant de réduire le rayon de braquage du véhicule, et comme l'illustrent les figures 4, 8 et 9, les quatre roues avant droite RFD, avant gauche RFG, arrière droite RRD et arrière gauche RRG sont directrices.

A cet effet, chacune de ces roues avant droite RFD, avant gauche RFG, arrière droite RRD et arrière gauche RRG est respectivement montée sur un porte-moyeu avant droit PFD, avant gauche PFG, arrière droit PRD et arrière gauche PRG, chacun de ses porte-moyeux avant et arrière PFD,PFG,PRD,PRG étant monté pivotant sur le châssis 12 autour d'un axe de porte-moyeu AFD,AFG,ARD,ARG sensiblement parallèle à l'axe vertical AV du châssis 12.

Ensuite, et afin qu'une rotation LD,LG d'une pédale de direction PD,PG autour de son axe de pivotement APD,APG entraine un changement d'orientation de chaque roue directrice RFD,RFG,RRD,RRG, chaque pédale de direction PD,PG est reliée par un mécanisme articulé 36 à chaque porte-moyeu PFD,PFG,PRD,PRG de chaque roue directrice RFD,RFG,RRD,RRG. Plus en détails, chaque porte-moyeu pivotant PFD,PFG,PRD,PRG comprenant un bras de levier BFD,BFG,BRD,BRG s'étendant perpendiculairement à l'axe de porte-moyeu AFD,AFG,ARD,ARG correspondant, et chaque pédale de direction PD,PG comprenant un bras de direction 30D,30G s'étendant perpendiculairement à son axe de pivotement APD,APG, le bras de direction 30D,30G de chaque pédale de direction PD,PG est relié au bras de levier BFD,BFG,BRD,BRG de chaque porte-moyeu pivotant PFD,PFG,PRD,PRG par des bielles articulées et par un dispositif central articulé.

Les deux pédales droite PD et gauche PG étant de préférence des pédales de direction, une première bielle avant droite 32FD relie le bras de levier BFD du porte-moyeu avant droit PFD au bras de direction 30D de la pédale droite PD, une deuxième bielle avant gauche 32FG relie le bras de levier BFG du porte-moyeu avant gauche PFG au bras de direction 30G de la pédale gauche PG, et le dispositif central articulé 38 relie les bras de leviers BRD,BRG de chaque porte-moyeu arrière PRD,PRG aux bras de direction 30D,30G des pédales de direction PD,PG.

Dans cette seconde variante des moyens directionnels 27, le dispositif central articulé 38 se substitue structurellement à la bielle centrale 34F de la première variante des moyens directionnels 27, et plus particulièrement au sein des deuxième et troisième liaisons L2,L3, les première et quatrième liaisons L1,L4 restant identiques.

Aussi, et en plus de participer à la transmission du mouvement de rotation LD,LG de chaque pédale de direction PD,PG vers les porte-moyeux PFD,PFG des roues avant RFD,RFG, ce dispositif central articulé 38 permet de reporter le mouvement de rotation LD,LG de chaque pédale de direction PD,PG vers les porte-moyeux PRD,PRG des roues arrières RRD,RRG.

A cet effet, et des pédales de direction PD,PG vers les porte-moyeux PRD,PRG des roues arrières RRD,RRG, ce dispositif central articulé 38 comprend un manchon linéaire avant 40, un coulisseau 42, un manchon linéaire arrière 44, deux bras de direction auxiliaire droit 46D et gauche 46G, et deux bielles articulées arrière droite 48D et gauche 48G.

Chaque manchon linéaire 40,44 comprend un corps 40C,44C fixé sur le coulisseau 42 et une tige 40T,44T coulissant par rapport à ce corps.

Chaque tige 40T,44T de chaque manchon linéaire 40,44 comprend à chacune de ses extrémités droite E40D,E44D et gauche E40G,E44G des extensions fixes droite X40D,X44D et gauche X40G,X44G s'étendant perpendiculairement à la direction longitudinale D40,D44 de cette tige, les deux extensions fixes droite X40D,X44D et gauche X40G,X44G de chaque tige 40T,44T s'étendant dans des directions opposées.

Structurellement, les extensions fixes droite X40D et gauche X40G relient respectivement les bras de direction 30D,30G à la tige 40T du manchon linéaire avant 40, le corps 40C du manchon linéaire avant 40 relie la tige avant 40T de ce manchon au coulisseau 42, le coulisseau 42 relie le corps 40C du manchon linéaire avant 40 au corps 44C du manchon linéaire arrière 44, le corps 44C du manchon linéaire arrière 44 relie le coulisseau 42 à la tige 44T de ce manchon, les extensions fixes droite X44D et gauche X44G relient respectivement les bras de direction auxiliaires droit 46D et gauche 46G à la tige 44T du manchon linéaire arrière 44, et les deux bielles articulées arrière droite 48D et gauche 48G relient respectivement les bras de direction auxiliaires droit 46D et gauche 46G aux bras de leviers droit BRD et gauche BRG des porte-moyeux arrière PRD,PRG.

Cinématiquement, le coulisseau 42 est monté coulissant par rapport au châssis 12 dans l'axe longitudinal AL de ce châssis, par exemple à l'aide de patins et de rails de guidage, et les directions D40 et D44 respectives de coulissement des tiges 40T,44T des manchons linéaire avant 40 et arrière 44 sont perpendiculaires l'une par rapport à l'autre et chacune inclinée de 45° par rapport à la direction de l'axe longitudinal AL du châssis 12.

Aussi, les manchons linéaires avant 40 et arrière 44 sont montés sur le coulisseau 42 symétriquement à un plan médian transversal PMT parallèle à l'axe transversal AT du châssis 12 et perpendiculaire à l'axe longitudinal AL de ce châssis.

De préférence, et toujours du point de vue cinématique, les bras de direction auxiliaires droit 46D et gauche 46G sont respectivement montés pivotant par rapport au châssis 12 autour d'axes de pivotement droit A46D et gauche A46G sensiblement parallèles à l'axe vertical AV du châssis 12, et les liaisons L5,L6,L7,L8 entre les bielles articulées 48D,48G et ces bras de direction 46D,46G et les extensions X44D,X44G sont des liaisons articulées autour d'axes D5,D6,D7,D8 sensiblement parallèles à l'axe vertical AV du châssis 12.

Donc, les bielles 48D,48G, et de manière générale l'ensemble des composants du mécanisme articulé directionnel 36, sont de préférence articulés dans un plan d'articulation PA perpendiculaire à l'axe vertical AV du châssis 12.

Toujours de préférence, la sixième liaison L6 regroupe la liaison articulée de la bielle arrière droite 48D avec le bras de direction auxiliaire droit 46D et la liaison articulée de l'extension droite X44D du manchon arrière 44 avec le bras de direction auxiliaire droit 46D, et la septième liaison L7 regroupe la liaison articulée de la bielle arrière gauche 48G avec le bras de direction auxiliaire gauche 46G et la liaison articulée de l'extension gauche X44G du manchon arrière 44 avec le bras de direction auxiliaire gauche 46G.

Dans cette seconde variante des moyens directionnels 27, les différents composants du mécanisme articulé 36 sont aussi situés sous le châssis 12.

En outre, les bielles 32FD,32FG, le manchon linéaire avant 40, les bras de direction 30D,30G et les bras de levier BFD,BFG sont situés à l'avant 16 du châssis 12, entre les deux roues avant RFD,RFG directrices.

Le manchon linéaire arrière 44, les bielles 48D,48G, les bras de direction auxiliaires 46D,46G et les bras de levier BRD,BRG sont situés à l'arrière 20 du châssis 12, entre les deux roues arrière RRD,RRG directrices.

Et, le coulisseau 42 est aussi monté sous le châssis 12, entre l'avant 16 et l'arrière 20 du châssis 12, de manière à effectuer la liaison mécanique entre le manchon linéaire avant 40 et le manchon linéaire arrière 44.

En complément, et dans l'une ou l'autre des deux variantes de réalisation des moyens directionnels 27, le mécanisme articulé 28,36 peut être équipé d'un vérin d'assistance 50 au changement de direction, ce vérin d'assistance 50 comprenant un corps 52 fixé au châssis 12 du véhicule et une tige 54 reliée à élément mobile du mécanisme articulé 28,36. Avantageusement, le fonctionnement de ce vérin d'assistance 50 est piloté grâce à au moins un capteur (non représenté sur les figures) mesurant la rotation LD,LG d'au moins une pédales de direction PD,PG par rapport au châssis 12.

Alternativement à ce vérin 50, l'assistance au changement de direction peut être obtenue en envoyant des consignes de vitesse différentes aux motorisations électriques MD,MG de chacune des deux roues avant droite RFD et gauche RFG.

Dans la seconde variante de réalisation des moyens directionnels 27, et comme illustré par la figure 4, la tige 54 du vérin d'assistance 50 est de préférence fixée au coulisseau 42.

Selon une autre caractéristique du véhicule 10 visant à améliorer le confort de l'utilisateur et à faciliter le pilotage en direction et en vitesse du véhicule 10, et sachant que l'assise 22 est sensiblement prévue en position centrale dans la largeur W12 et dans la longueur L12 du châssis 12, les deux pédales droite PD et gauche PG sont montées à l'avant 16 du châssis 12. Plus en détails, les deux pédales droite PD et gauche PG sont montées côte-à-côte sur le châssis 12 du véhicule, entre les deux roues droite RFD et gauche RFG du train 14 de roues avant.

Encore plus précisément, le châssis 12 comprenant une traverse avant 56 aux extrémités droite 56D et gauche 56G de laquelle sont respectivement montées les roues avant droite RFD et gauche RFG, les deux pédales droite PD et gauche PG sont montées côte-à-côte sur cette traverse avant 56.

Comme indiqué précédemment, ce positionnement des pédales PD,PG devant l'assise 22 permet à l'utilisateur d'être en position assis-debout avec les jambes en avant.

Par position assis-debout, l'invention entend une position à mi-chemin entre une position assise classique, avec les cuisses perpendiculaires au torse, et une position debout.

Cette position de conduite assis-debout, visible en figure 9, est confortable pour l'utilisateur qui peut se déplacer en ayant la tête à même hauteur que des piétons autour de lui.

De plus, cette position de conduite assis-debout avec les jambes en avant permet à l'utilisateur de mieux se maintenir sur le véhicule lors de chaque décélération.

En vue de permettre à des utilisateurs ayant différentes morphologies d'utiliser le véhicule 10 avec une position assis-debout adaptée à leur morphologie, le véhicule 10 comprend des moyens de réglage 58 de la hauteur H22 de l'assise 22 par rapport aux pédales PD,PG. Comme l'illustrent les figures 2 et 6, ces moyens de réglage 58 prennent la forme de moyens permettant de translater l'assise 22 le long de l'axe vertical AV du châssis 12.

Ces moyens de réglage 58 prennent par exemple la forme de tubes 60 montés coulissant par rapport au châssis 12, l'assise 22 étant fixée aux extrémités supérieures 64 de ces tubes 60. Bien entendu, il est aussi prévu des moyens d'arrêt 66 de la translation des tubes 60 par rapport au châssis 12 afin de bloquer la position de l'assise 22, ces moyens d'arrêt 66 fonctionnant par exemple par serrage des tubes 60.

Avantageusement, et toujours afin d'adapter la position de l'assise 22 par rapport au châssis 12 en fonction de la morphologie de l'utilisateur, ces moyens de réglage 58 permettent aussi de translater l'assise 22 le long de l'axe longitudinal AL du châssis 12.

Plus précisément, les moyens de réglage 58 permettent de translater simultanément l'assise 22 le long de l'axe vertical AV et de l'axe longitudinal AL du châssis 12.

En effet, l'invention prévoyant deux variantes de réalisation du châssis 12, dans ces deux variantes, les tubes 60 coulissent selon une direction de réglage DR inclinée par rapport à l'axe vertical AV du châssis 12.

Dans la première variante de réalisation du châssis 12 illustrée par les figures 1 à 4 et 8 et 9, le châssis 12 étant monolithique, l'assise 22 est repliable vers le châssis pour réduire l'encombrement du véhicule 10, comme le montre plus particulièrement la figure 8.

Dans cette première variante, les tubes 60 sont montés coulissant sur un support rotatif 68. Plus en détails, ce support 68 est monté en rotation R68 autour d'un axe de rotation A68 sensiblement perpendiculaire à l'axe vertical AV et prévu à l'arrière 20 du châssis 12.

Aussi, il est prévu des moyens d'arrêt 70 de la rotation R68 du support rotatif 68 autour de son axe de rotation A68.

Ces moyens d'arrêt 70 prennent par exemple la forme de contrefiches droite 72D et gauche 72G reliant le support rotatif 68 au châssis 12 en parallèle de la liaison rotative de ce support 68 au châssis 12.

Les extrémités supérieures 74 de ces contrefiches droite 72D et gauche 72G sont articulées au support 68 autour d'un axe de contrefiche AC distinct de l'axe de rotation A68 du support rotatif 68.

Et, les extrémités inférieures 76 de ces contrefiches droite 72D et gauche 72G sont articulées à des patins droit 78D et gauche 78G montés en translation T78 sensiblement le long de l'axe longitudinal AL sur des rails droit 80D et gauche 80G prévus le châssis 12.

Afin de bloquer la rotation R68 du support rotatif 68, il est prévu des moyens d'arrêt 82 de la translation T78 des patins 78D,78G.

Ces moyens d'arrêt 82, fonctionnant par exemple par serrage, sont de préférence actionnables manuellement.

Ainsi, en réglant la position d'arrêt des patins 78D,78G sur les rails 80D,80G, l'utilisateur peut régler l'inclinaison du support 68 par rapport au châssis 12 et donc l'inclinaison de la direction de réglage DR le long de laquelle coulissent les tubes 60.

Afin de procurer plus de confort à l'utilisateur, les contrefiches droite 72D et gauche 72G peuvent intégrer un dispositif d'amortissement.

Dans cette première variante, le châssis 12 comprend une traverse avant 56 et une traverse arrière 84 reliées par trois longerons : un longeron central 86 et deux longerons latéraux droit 88D et gauche 88G.

Comme le montre la figure 4, les bras de direction auxiliaires 46D,46G sont montés sous la traverse arrière 84, tandis que le coulisseau 42 est monté sous le longeron central 86.

De plus, les rails droit 80D et gauche 80G sont respectivement montés sur les longerons latéraux droit 88D et gauche 88G.

Toujours en vue de réduire l'encombrement du véhicule 10 lorsqu'il n'est pas utilisé, et toujours dans cette première variante de réalisation du châssis 12, la base 89 de l'assise 22 est rabattable contre son dossier 91.

Dans une seconde variante de réalisation illustrée par les figures 5 à 7, le châssis 12 comprend deux parties avant 90 et arrière 92 articulées l'une à l'autre autour d'un axe d'articulation AA perpendiculaire à l'axe vertical AV du châssis 12.

Cette articulation entre les parties avant 90 et arrière 92 permet de réduire l'encombrement du véhicule 10 lorsqu'il n'est pas utilisé en rapprochant les trains de roue avant 14 et arrière 18, comme l'illustre la figure 7.

En vue de l'utilisation du véhicule 10, il est prévu une butée 94 arrêtant le déploiement D de la partie arrière 92 par rapport à la partie avant 90 et un mécanisme de verrouillage 96 de cette mise en butée.

Dans l'exemple illustré en figure 6, la butée 94 est portée par la partie avant 90.

Parallèlement, le mécanisme de verrouillage 96 comprend un alésage 98 traversant la partie arrière 92, un alésage 100 traversant la partie avant 90, et un axe de verrouillage 102 inséré dans ces alésages 98,100 qui sont coaxiaux lorsque la partie arrière 92 vient en appui contre la butée 94.

De préférence, l'axe de verrouillage 102 est actionnable par un serrage manuel.

Dans cette seconde variante de réalisation du châssis 12, la partie arrière 92 prend la forme d'une poutre arrière 104 solidaire d'une traverse arrière 106, les roues arrières droite RRD et gauche RRG étant montées aux extrémités de cette traverse arrière 106.

La traverse arrière 106 s'étendant le long de l'axe transversal AT du châssis 12, la poutre arrière 104 s'étend le long de l'axe longitudinal AL du châssis et perpendiculairement à la traverse arrière 106.

Toujours dans cette seconde variante de réalisation du châssis 12, la partie avant 90 est formée par au moins une poutre avant 108 solidaire de la traverse avant 56 supportant les pédales PD,PG de direction et de vitesse et le mécanisme articulé 28.

Cette poutre avant 108 s'étend aussi le long de l'axe longitudinal AL du châssis et perpendiculairement à la traverse avant 56.

De préférence, les tubes 60 supportant l'assise 22 sont montés coulissant sur cette poutre avant 108.

Avantageusement, cette partie avant 90 intègre des moyens amortisseur 110 entre la poutre avant 108 et l'axe d'articulation AA.

Ces moyens amortisseur 110 comprennent une poutre intermédiaire 112 articulée à la poutre avant 108 autour d'un axe intermédiaire AI situé dans la longueur L108 de la poutre avant 108 et parallèle à l'axe d'articulation AA, et des amortisseurs droit 114D et gauche 114G articulés entre cette poutre intermédiaire 112 et la poutre avant 108.

Plus précisément, l'axe intermédiaire AI se situant à l'extrémité avant 116 de la poutre intermédiaire 112, et l'axe d'articulation AA étant prévu à l'extrémité arrière 118 de la poutre intermédiaire 112, les amortisseurs droit 114D et gauche 114G sont articulés entre l'axe d'articulation AA et un axe d'extrémité AE situé à l'extrémité supérieure 120 de la poutre avant 108 et parallèle à l'axe d'articulation AA.

Toujours en vue de réduire l'encombrement du véhicule 10 lorsqu'il n'est pas utilisé, et toujours dans cette seconde variante de réalisation du châssis 12, le dossier 120 de l'assise 22 est rabattable.

Dans l'une ou l'autre des variantes de réalisation du châssis 12, le positionnement de l'assise 22 sur le châssis 12 et relativement aux pédales PD,PG offre une position de conduite confortable aux utilisatrices portant une robe ou une jupe.

Toujours dans l'une ou l'autre des variantes de réalisation du châssis 12, les différents éléments formant le châssis 12 et les moyens directionnels 27 peuvent être protégés par des caches, ces caches permettant à la fois d'améliorer l'aspect extérieur du véhicule et de protéger l'utilisateur des pièces mécaniques en mouvement.

En complément des pédales PD,PG, les moyens 24 de pilotage peuvent comprendre un moyen de commande, tel un interrupteur, permettant de sélectionner le sens de marche avant ou arrière du véhicule 10.

De préférence, ce moyen de commande, non illustré sur les figures, est positionné sur le châssis 12 du véhicule 10 à un emplacement accessible par une main de l'utilisateur ou par un pied de l'utilisateur, soit par exemple à côté d'une pédale PD,PG.

La présente invention prévoit aussi différents perfectionnements destinés à améliorer l'expérience de l'utilisateur du véhicule personnel 10 selon l'invention.

Selon un premier perfectionnement, les pédales droite PD et gauche PG comprennent des parois latérales droite 122D et gauche 112G s'élevant de part et d'autre des surfaces de réception SD,SG offertes par ces pédales, comme l'illustre la figure 8.

En améliorant le maintien des pieds de l'utilisateur sur les surfaces de réception SD,SG des pédales, ces parois latérales droite 122D et gauche 122G facilitent la conduite du véhicule.

Selon un autre perfectionnement, il est prévu un train avant directionnel mais il est possible de prévoir aussi simultanément des roues RRG et RRG arrière directionnelles, comme cela est illustré sur la figue 10. Dans ce cas, les roues arrière sont montées pivotantes sur des supports 64D, 64G à axes XDXD' et XGXG' de pivotement vertical.

Des jeux D64D et 64G de biellettes assurent la transmission du mouvement de rotation aux roues à partir d'une liaison également par biellettes avec les bras 30 de direction. La rotation est inversé pour que les roues suivent une même courbe. Ainsi, lorsque la roue avant droite tourne à droite la roue arrière droite tourne à gauche comme montré sur le dessin.

La maniabilité est encore renforcée et la rotation du véhicule s'effectue de façon extrêmement souple. De plus, les bandes de roulement des roues sont moins soumise à frottement.

Selon un autre perfectionnement, le train de roues arrière 18 peut être équipé de plateformes droite 124D et gauche 124G permettant à une personne de se tenir debout derrière l'utilisateur installé sur l'assise 22.

Enfin, et en fonction de l'utilisation du véhicule personnel 10, il peut être prévu d'équiper le véhicule 10 avec des supports publicitaires 126, et/ou avec un support 128 pour une tablette tactile.

## Revendications

1. Véhicule personnel (10) conduisible avec les pieds, le véhicule (10) comprenant un châssis (12) s'étendant en longueur (L12) le long d'un axe longitudinal (AL), en largeur (W12) le long d'un axe transversal (AT), et en hauteur (H12) le long d'un axe vertical (AV), le véhicule (10) comprenant en outre un train (14) de roues avant monté à l'avant (16) de ce châssis, un train (18) de roues arrière monté à l'arrière (20) de ce châssis, une assise (22) montée sur ce châssis, au moins un moteur (MD,MG) permettant d'entrainer en rotation au moins une roue (RFD,RFG) d'un train (14) de roue, des moyens d'alimentation de ce moteur, et des moyens (24) de pilotage du véhicule (10) en vitesse et en direction prenant la forme de deux pédales droite (PD) et gauche (PG), chaque pédale (PD,PG) comprenant une surface de réception (SD,SG) d'un pied de l'utilisateur, et au moins une pédale (PD,PG), dite de vitesse, étant montée en rotation (TD,TG) par rapport au châssis (12) autour d'un axe de basculement (ABD,ABG) perpendiculaire à l'axe vertical (AV) du châssis (12) du véhicule (10), une rotation (TD,TG) de cette pédale (PD,PG) de vitesse autour de son axe de basculement (ABD,ABG) étant utilisée pour piloter le véhicule (10) en vitesse, le véhicule personnel (10) étant **caractérisé en ce qu'**au moins une pédale (PD,PG), dite de direction, est montée en rotation (LD,LG) par rapport au châssis (12) autour d'un axe de pivotement (APD,APG) parallèle à l'axe vertical (AV) du châssis (12) du véhicule (10), une rotation (LD,LG) de cette pédale de direction (PD,PG) autour de son axe de pivotement (APD,APG) étant utilisée pour piloter le véhicule (10) en direction.

2. Véhicule personnel (10) conduisible avec les pieds selon la revendication 1, **caractérisé en ce que**, l'assise (22) étant prévue en position centrale dans la largeur (W12) et dans la longueur (L12) du châssis (12), les deux pédales droite (PD) et gauche (PG) sont montées à l'avant (16) du châssis (12).

3. Véhicule personnel (10) conduisible avec les pieds selon la revendication 2, **caractérisé en ce que** les deux pédales droite (PD) et gauche (PG) sont montées côte-à-côte sur le châssis (12) du véhicule, entre les deux roues droite (RFD) et gauche (RFG) du train (14) de roues avant.

4. Véhicule personnel (10) conduisible avec les pieds selon la revendication 3, **caractérisé en ce que**, le châssis (12) comprenant une traverse avant (56) aux extrémités droite (56D) et gauche (56G) de laquelle sont respectivement montées les roues avant droite (RFD) et gauche (RFG), les deux pédales droite (PD) et gauche (PG) sont montées côte-à-côte sur cette traverse avant (56).

5. Véhicule personnel (10) conduisible avec les pieds selon l'une des revendications précédentes, **caractérisé en ce que**, au moins un train de roues (14,18) comprenant des roues directrices (RFD,RFG,RRD,RRG), et chacune de ces roues directrices (RFD,RFG,RRD,RRG) étant montée sur un porte-moyeu (PFD,PFG,PRD,PRG) monté pivotant sur le châssis (12) autour d'un axe de porte-moyeu (AFD,AFG,ARD,ARG) parallèle à l'axe vertical (AV) du châssis (12), chaque pédale de direction (PD,PG) est reliée par un mécanisme articulé (28,36) à chaque porte-moyeu (PFD,PFG,PRD,PRG) de chaque roue directrice (RFD,RFG,RRD,RRG) de façon qu'une rotation (LD,LG) de cette pédale de direction autour de son axe de pivotement (APD,APG) entraine un changement d'orientation de chaque roue directrice.

6. Véhicule personnel (10) conduisible avec les pieds selon la revendication 5, **caractérisé en ce que**, les deux roues avant droite (RFD) et gauche (RFG) étant directrices, chaque porte-moyeu pivotant (PFD,PFG) comprenant un bras de levier (BFD,BFG) s'étendant perpendiculairement à l'axe de porte-moyeu (AFD,AFG) correspondant, et chaque pédale de direction (PD,PG) comprenant un bras de direction (30D,30G) s'étendant perpendiculairement à son axe de pivotement (APD,APG), le bras de direction (30D,30G) de chaque pédale de direction (PD,PG) est relié au bras de levier (BFD,BFG) de chaque porte-moyeu pivotant (PFD,PFG) par des bielles articulées (32FG,34F,32FG).

7. Véhicule personnel (10) conduisible avec les pieds selon la revendication 5, **caractérisé en ce que**, les quatre roues avant droite (RFD), avant gauche (RFG), arrière droite (RRD) et arrière gauche (RRG) étant directrices, et chaque porte-moyeu pivotant (PFD,PFG,PRD,PRG) comprenant un bras de levier (BFD,BFG,BRD,BRG) s'étendant perpendiculairement à l'axe de porte-moyeu (AFD,AFG,ARD,ARG) correspondant, et chaque pédale de direction (PD,PG) comprenant un bras de direction (30D,30G) s'étendant perpendiculairement à son axe de pivotement (APD,APG), le bras de direction (30D,30G) de chaque pédale de direction (PD,PG) est relié au bras de levier (BFD,BFG,BRD,BRG) de chaque porte-moyeu pivotant (PFD,PFG,PRD,PRG) par des bielles articulées (32FD,32FG) et par un dispositif central articulé (38).

8. Véhicule personnel (10) conduisible avec les pieds selon l'une des revendications 5 à 7, **caractérisé en ce que** le mécanisme articulé (28,36) est équipé d'un vérin d'assistance (50) au changement de direction, ce vérin d'assistance (50) comprenant un corps (52) fixé au châssis (12) du véhicule (10) et une tige (54) reliée à un élément mobile (42) du mécanisme articulé (28,36).

9. Véhicule personnel (10) conduisible avec les pieds selon l'une des revendications précédentes, **caractérisé en ce que** les deux pédales droite (PD) et gauche (PG) sont des pédales de direction, ces deux pédales de direction droite (PD) et gauche (PG) étant montées en rotation (LD,LG) par rapport au châssis (12) respectivement autour d'axes de pivotement droit (APD) et gauche (APG) parallèles à l'axe vertical (AV) du châssis (12) du véhicule (10), et des rotations (LD,LG) simultanées de ces deux pédales de direction droite (PD) et gauche (PG) autour de leur axes de pivotement droit (APD) et gauche (APG) étant utilisées pour piloter le véhicule (10) en direction.

10. Véhicule personnel (10) conduisible avec les pieds selon l'une des revendications précédentes, **caractérisé en ce que** les deux pédales droite (PD) et gauche (PG) sont des pédales de vitesse, ces deux pédales de vitesse droite (PD) et gauche (PG) étant montées en rotation (TD,TG) par rapport au châssis (12) respectivement autour d'axes de basculement droit (ABD) et gauche (ABG) perpendiculaires à l'axe vertical (AV) du châssis (12) du véhicule (10), une rotation (TD) de la pédale droite (PD) autour de son axe de basculement droit (ABD) étant utilisée pour augmenter la vitesse du véhicule (10), et une rotation (TG) de la pédale gauche (PG) autour de son axe de basculement gauche (ABG) étant utilisée pour réduire la vitesse du véhicule (10).

11. Véhicule personnel (10) conduisible avec les pieds selon l'une des revendications précédentes, **caractérisé en ce qu'**il comprend des roues arrière (RRD, RRG) directrices.

12. Véhicule personnel (10) conduisible avec les pieds selon l'une des revendications précédentes, **caractérisé en ce qu'**il comprend des moyens de réglage (58) de la hauteur (H22) de l'assise (22) par rapport aux pédales (PD,PG).

13. Véhicule personnel (10) conduisible avec les pieds selon la revendication précédente, **caractérisé en ce que** les moyens de réglage (58) permettent de translater l'assise (22) le long de l'axe longitudinal (AL) du châssis (12).

14. Véhicule personnel (10) conduisible avec les pieds selon l'une des revendications 1 à 13, **caractérisé en ce que** le châssis (12) du véhicule (10) comprend deux parties avant (90) et arrière (92) articulées l'une à l'autre autour d'un axe d'articulation (AA) perpendiculaire à l'axe vertical (AV) du châssis (12).

15. Véhicule personnel (10) conduisible avec les pieds selon l'une des revendications 1 à 13, **caractérisé en ce que**, le châssis (12) étant monolithique, l'assise (22) est repliable vers le châssis pour réduire l'encombrement du véhicule (10).

## Patentansprüche

1. Mit den Füßen fahrbares Personenfahrzeug (10), das einen Fahrzeugrahmen (12) umfasst, der sich in der Länge (L12) entlang einer Längsachse (AL) erstreckt, in der Breite (W12) entlang einer Querachse (AT), und in der Höhe (H12) entlang einer senkrechten Achse (AV), wobei das Fahrzeug (10) zudem einen an der Vorderseite (16) dieses Fahrzeugrahmens montierten vorderen Radsatz (14), einen an der Hinterseite (20) dieses Fahrzeugrahmens montierten hinteren Radsatz (18), einen auf diesem Fahrzeugrahmen montierten Sitz (22), mindestens einen Motor (MD, MG), der den Drehantrieb von mindestens einem Rad (RFD,RFG) eines Radsatzes (14) ermöglicht, Versorgungsmittel für diesen Motor und Mittel (24) zum Steuern der Geschwindigkeit und Richtung des Fahrzeugs (10) in Form eines rechten (PD) und linken (PG) Pedals umfasst, wobei jedes Pedal (PD,PG) eine Aufnahmefläche (SD, SG) für einen Fuß des Anwenders umfasst, und wobei mindestens ein sogenanntes Geschwindigkeitspedal (PD,PG), das in Bezug zum Fahrzeugrahmen (12) um eine Schwenkachse (ABD,ABG) drehbar, senkrecht zur vertikalen Achse (AV) des Fahrzeugrahmens (12) montiert ist, wobei eine Drehung (TD,TG) dieses Geschwindigkeitspedals (PD,PG) um seine Schwenkachse (ABD,ABG) dem Steuern der Geschwindigkeit des Fahrzeugs (10) dient, wobei das Personenfahrzeug (10) **dadurch gekennzeichnet ist, dass** mindestens ein sogenanntes Richtungspedal (PD,PG) in Bezug zum Fahrzeugrahmen (12) drehbar um eine Schwenkachse (APD, APG), parallel zur senkrechten Achse (AV) des Fahrzeugrahmens (12) montiert ist, wobei eine Drehung (LD,LG) dieses Richtungspedals (PD,PG) um seine Schwenkachse (APD,APG) dem Steuern der Richtung des Fahrzeugs (10) dient.

2. Mit den Füßen fahrbares Personenfahrzeug (10) nach Anspruch 1, **dadurch gekennzeichnet, dass** während der Sitz (22) in der Breite (W12) und in der Länge (L12) des Fahrzeugrahmens (12) in zentraler Lage vorgesehen ist, das rechte (PD) und linke (PG) Pedal an der Vorderseite (16) des Fahrzeugrahmens (12) montiert sind.

3. Mit den Füßen fahrbares Personenfahrzeug (10) nach Anspruch 2, **dadurch gekennzeichnet, dass** das rechte (PD) und linke (PG) Pedal nebeneinander am Fahrzeugrahmen (12) zwischen dem rechten (RFD) und linken (FRG) des vorderen Radsatzes (14) montiert sind.

4. Mit den Füßen fahrbares Personenfahrzeug (10) nach Anspruch 3, **dadurch gekennzeichnet, dass** während der Fahrzeugrahmen (12) eine vordere Querstrebe (56) mit einem rechten (56D) und linken (56G) Ende umfasst, an denen jeweils das rechte Vorderrad (RFD) und das linke Vorderrad (RFG) montiert sind, das rechte (PD) und linke (PG) Pedal nebeneinander auf dieser vorderen Querstrebe (56) montiert sind.

5. Mit den Füßen fahrbares Personenfahrzeug (10) nach einem der vorausgehenden Ansprüche, **dadurch gekennzeichnet, dass** während mindestens ein Radsatz (14,18) mit den gelenkten Rädern (RFD, RFG, RRD, RRG), und alle gelenkten Räder (RFD, RFG, RRD, RRG) an einer Nabenhalterung (PFD, PFG, PRD, PRG) montiert sind, die um eine zur senkrechten Achse (AV) des Fahrzeugrahmens (12) parallele Achse der Nabenhalterung (AFD, AFG, ARD, ARG) schwenkbar montiert ist, jedes Richtungspedal (PD, PG) durch einen Gelenkmechanismus (28,36) derart mit jeder Nabenhalterung (PFD,PFG,PRD,PRG) jedes gelenkten Rads (RFD,RFG,RRD,RRG) verbunden ist, dass eine Drehung (LD,LG) dieses Richtungspedals um seine Schwenkachse (APD,APG) zu einem Richtungswechsel jedes gelenkten Rads führt.

6. Mit den Füßen fahrbares Personenfahrzeug (10) nach Anspruch 5, **dadurch gekennzeichnet, dass** während das rechte (RFD) und linke (RFG) Vorderrad gelenkte Räder sind und jede schwenkbare Nabenhalterung (PFD,PFG) einen Hebelarm (BFD,BFG) umfasst, der sich quer zur entsprechenden Achse der Nabenhalterung (AFD,AFG) erstreckt, und jedes Richtungspedal (PD,PG) einen Richtungsarm (30D,30G) umfasst, der sich quer zu seinem Schwenkarm (APD,APG) erstreckt, der Richtungsarm (30D,30G) jedes Richtungspedals (PD,PG) über Gelenkstangen (32FG,34F,32FG) mit dem Hebelarm (BFD,BFG) jeder schwenkbaren Nabenhalterung (PFD,PFG) verbunden ist.

7. Mit den Füßen fahrbares Personenfahrzeug (10) nach Anspruch 5, **dadurch gekennzeichnet, dass** während das rechte Vorderrad (RFD), das linke Vorderrad (RFG), das rechte Hinterrad (RRD) und das linke Hinterrad (RRG) lenkbar sind, und jede schwenkbare Nabenhalterung (PFD,PFG,PRD,PRG) einen Hebelarm (BFD,BFG,BRD,BRG) umfasst, der sich quer zur entsprechenden Achse der Nabenhalterung (AFD,AFG,ARD,ARG) erstreckt, und jedes Richtungspedal (PD,PG) einen Richtungsarm (30D,30G) umfasst, der sich quer zu seiner Schwenkachse (APD,APG) erstreckt, der Richtungsarm (30D,30G) jedes Richtungspedals (PD,PG) über Gelenkstangen (32FD,32FG) und eine zentrale Gelenkvorrichtung (38) mit dem Hebelarm (BFD,BFG,BRD,BRG) jeder schwenkbaren Nabenhalterung (PFD,PFG,PRD,PRG) verbunden ist.

8. Mit den Füßen fahrbares Personenfahrzeug (10) nach einem der Ansprüche 5 bis 7, **dadurch gekennzeichnet, dass** der Gelenkmechanismus (28,36) für den Richtungswechsel mit einem Lenkzylinder (50) ausgestattet ist, wobei dieser Lenkzylinder (50) einen am Fahrzeugrahmen (12) befestigten Zylinderkörper (52) und eine mit einem beweglichen Teil (42) des Gelenkmechanismus (28,36) verbundene Kolbenstange (54) umfasst.

9. Mit den Füßen fahrbares Personenfahrzeug (10) nach einem der vorausgehenden Ansprüche, **dadurch gekennzeichnet, dass** das rechte (PD) und linke (PG) Pedal Richtungspedale sind, wobei dieses rechte (PD) und linke (PG) Richtungspedal in Bezug zum Fahrzeugrahmen (12) jeweils um eine rechte (APD) und linke (APG) Schwenkachse und parallel zur senkrechten Achse (AV) des Fahrzeugrahmens (12) drehbar (LD, LG) montiert sind, und gleichzeitige Drehungen (LD,LG) dieses rechten (PD) und linken (PG) Richtungspedals um ihre rechte (APD) und linke (APG) Schwenkachse zum richtungsgebenden Steuern des Fahrzeugs (10) dienen.

10. Mit den Füßen fahrbares Personenfahrzeug (10) nach einem der vorausgehenden Ansprüche, **dadurch gekennzeichnet, dass** das rechte (PD) und linke (PG) Pedal Geschwindigkeitspedale sind, wobei dieses rechte (PD) und linke (PG) Geschwindigkeitspedal in Bezug zum Fahrzeugrahmen (12) jeweils um eine rechte (ABD) und linke (ABG) Schwenkachse drehbar (TD,TG), quer zur vertikalen Achse (AV) des Fahrzeugrahmens (12) montiert sind, wobei eine Drehung (TD) des rechten Pedals (PD) um seine rechte Schwenkachse (ABD) dem Erhöhen der Geschwindigkeit des Fahrzeugs (10) dient, und eine Drehung (TG) des linken Pedals (PG) um seine linke Schwenkachse (ABG) dem Reduzieren der Geschwindigkeit des Fahrzeugs (10) dient.

11. Mit den Füßen fahrbares Personenfahrzeug (10) nach einem der vorausgehenden Ansprüche, **dadurch gekennzeichnet, dass** es lenkbare Hinterräder (RRD,RRG) umfasst.

12. Mit den Füßen fahrbares Personenfahrzeug (10) nach einem der vorausgehenden Ansprüche, **dadurch gekennzeichnet, dass** es Mittel zum Einstellen (58) der Höhe (H22) des Sitzes (22) in Bezug zu den Pedalen (PD,PG) umfasst.

13. Mit den Füßen fahrbares Personenfahrzeug (10) nach vorausgehendem Anspruch, **dadurch gekennzeichnet, dass** die Einstellmittel (58) auch das Verschieben des Sitzes (22) entlang der Längsachse (AL) des Fahrzeugrahmens (12) ermöglichen.

14. Mit den Füßen fahrbares Personenfahrzeug (10) nach einem der Ansprüche 1 bis 13, **dadurch gekennzeichnet, dass** der Fahrzeugrahmen (12) ein um eine Gelenkachse (AA), die quer zur senkrechten Achse (AV) des Fahrzeugrahmens (12) verläuft, gelenkig verbundenes Vorderteil (90) und Hinterteil (92) umfasst.

15. Mit den Füßen fahrbares Personenfahrzeug (10) nach einem der Ansprüche 1 bis 13, **dadurch gekennzeichnet, dass** der Rahmen (12) monolithisch gebaut ist und der Sitz (22) dadurch auf den Rahmen geklappt werden kann, um den Platzbedarf des Fahrzeugs (10) zu reduzieren.

## Claims

1. A foot-operated private vehicle (10), the vehicle (10) comprising a chassis (12) extending in length (L12) along a longitudinal axis (AL), in width (W12) along a transverse axis (AT), and in height (H12) along a vertical axis (AV), the vehicle (10) furthermore comprising a front wheel set (14) mounted at the front (16) of this chassis, a rear wheel set (18) mounted at the rear (20) of this chassis, a seat (22) mounted on this chassis, at least one motor (MD, MG) for rotating at least one wheel (RFD, RFG) of a wheel set (14), means for supplying power to this motor, and means (24) for controlling the vehicle (10) for speed and direction, taking the form of two right (PD) and left (PG) pedals, each pedal (PD, PG) comprising a surface (SD, SG) for receiving a foot of the user, and at least one so-called speed pedal(PD, PG) being mounted for rotation (TD, TG) with respect to the chassis (12) about a tilt axis (ABD, ABG) perpendicular to the vertical axis (AV) of the chassis (12) of the vehicle (10), a rotation (TD, TG) of this speed pedal (PD, PG) about the tilt axis (ABD, ABG) thereof being used for controlling the vehicle (10) for speed, the private vehicle (10) being **characterised in that** at least one so-called steering pedal (PD, PG) is mounted for rotation (LD, LG) with respect to the chassis (12) about a pivot axis (APD, APG) parallel to the vertical axis (AV) of the chassis (12) of the vehicle (10), a rotation (LD, LG) of this steering pedal (PD, PG) about the pivot axis (APD, APG) thereof being used for controlling the direction of the vehicle (10).

2. A foot-operated private vehicle (10) according to claim 1, **characterised in that**, the seat (22) being provided at a central position in the width (W12) and in the length (L12) of the chassis (12), the two right (PD) and left (PG) pedals are mounted at the front (16) of the chassis (12).

3. A foot-operated private vehicle (10) according to claim 2, **characterised in that** the two right (PD) and left (PG) pedals are mounted side by side on the chassis (12) of the vehicle, between the two right (RFD) and left (RFG) wheels of the front wheel set (14).

4. A foot-operated private vehicle (10) according to claim 3, **characterised in that**, the chassis (12) comprising a front cross-member (56) at the right (56D) and left (56G) ends of which the right (RFD) and left (RFG) front wheels are respectively mounted, the two right (PD) and left (PG) pedals are mounted side by side on this front cross-member (56).

5. A foot-operated private vehicle (10) according to any of the preceding claims, **characterised in that**, at least one wheel set (14, 18) comprising steered wheels (RFD, RFG, RRD, RRG), and each of these steered wheels (RFD, RFG, RRD, RRG) being mounted on a hub carrier (PFD, PFG, PRD, PRG) mounted on the chassis (12) so as to pivot about a hub-carrier axis (AFD, AFG, ARD, ARG) parallel to the vertical axis (AV) of the chassis (12), each steering pedal (PD, PG) is connected by an articulated mechanism (28, 36) to each hub carrier (PFD, PFG, PRD, PRG) of each steered wheel (RFD, RFG, RRD, RRG) so that a rotation (LD, LG) of this steering pedal about pivot axis (APD, APG) thereof causes a change in orientation of each steered wheel.

6. A foot-operated private vehicle (10) according to claim 5, **characterised in that**, the two right (RFD) and left (RFG) front wheels being steered, each pivoting hub carrier (PFD, PFG) comprising a lever arm (BFD, BFG) extending perpendicular to the corresponding hub-carrier axis (AFD, AFG), and each steering pedal (PD, PG) comprising a steering arm (30D, 30G) extending perpendicular to the pivot axis (APD, APG) thereof, the steering arm (30D, 30G) of each steering pedal (PD, PG) is connected to the lever arm (BFD, BFG) of each pivoting hub carrier (PFD, PFG) by articulated connecting rods (32FG, 34F, 32FG) .

7. A foot-operated private vehicle (10) according to claim 5, **characterised in that**, the four front right (RFD), front left (RFG), rear right (RRD) and rear left (RRG) wheels being steered, and each pivoting hub carrier (PFD, PFG, PRD, PRG) comprising a lever arm (BFD, BFG, BRD, BRG) extending perpendicular to the corresponding hub-carrier axis (AFD, AFG, ARD, ARG), and each steering pedal (PD, PG) comprising a steering arm (30D, 30G) extending perpendicular to the pivot axis (APD, APG) thereof, the steering arm (30D, 30G) of each steering pedal (PD, PG) is connected to the lever arm (BFD, BFG, BRD, BRG) of each pivoting hub carrier (PFD, PFG, PRD, PRG) by articulated connecting rods (32FD, 32FG) and by an articulated central device (38).

8. A foot-operated private vehicle (10) according to any of claims 5 to 7, **characterised in that** the articulated mechanism (28, 36) is equipped with a change-of-direction assistance cylinder (50), this assistance cylinder (50) comprising a body (52) attached to the chassis (12) of the vehicle (10) and a rod (54) connected to a movable element (42) of the articulated mechanism (28, 36).

9. A foot-operated private vehicle (10) according to any of the preceding claims, **characterised in that** the two right (PD) and left (PG) pedals are steering pedals, these two right (PD) and left (PG) steering pedals being mounted for rotation (LD, LG) with respect to the chassis (12) respectively about right (APD) and left (APG) pivot axes parallel to the vertical axis (AV) of the chassis (12) of the vehicle (10), and simultaneous rotations (LD, LG) of these two right (PD) and left (PG) steering pedals about the right (APD) and left (APG) pivot axes thereof being used for controlling the direction of the vehicle (10) .

10. A foot-operated private vehicle (10) according to any of the preceding claims, **characterised in that** the two right (PD) and left (PG) pedals are speed pedals, these two right (PD) and left (PG) speed pedals being mounted for rotation (TD, TG) with respect to the chassis (12) respectively about right (ABD) and left (ABG) tilt axes perpendicular to the vertical axis (AV) of the chassis (12) of the vehicle (10), a rotation (TD) of the right pedal (PD) about the right tilt axis (ABD) thereof being used for increasing the speed of the vehicle (10), and a rotation (TG) of the left pedal (PG) about the left tilt axis (ABG) thereof being used for reducing the speed of the vehicle (10) .

11. A foot-operated private vehicle (10) according to any of the preceding claims, **characterised in that** it comprises steered rear wheels (RRD, RRG).

12. A foot-operated private vehicle (10) according to any of the preceding claims, **characterised in that** it comprises means (58) for adjusting the height (H22) of the seat (22) with respect to the pedals (PD, PG).

13. A foot-operated private vehicle (10) according to the preceding claim, **characterised in that** the adjustment means (58) make it possible to translate the seat (22) along the longitudinal axis (AL) of the chassis (12).

14. A foot-operated private vehicle (10) according to any of claims 1 to 13, **characterised in that** the chassis (12) of the vehicle (10) comprises two front (90) and rear (92) parts articulated one on the other about an articulation axis (AA) perpendicular to the vertical axis (AV) of the chassis (12).

15. A foot-operated private vehicle (10) according to any of claims 1 to 13, **characterised in that**, the chassis (12) being in a single piece, the seat (22) can be folded towards the chassis in order to reduce the overall size of the vehicle (10) .
